# EUROPÄISCHE PATENTSCHRIFT

(11) **EP 3 259 158 B1**
(45) Veröffentlichungstag und Bekanntmachung des Hinweises auf die Patenterteilung: **07.11.2018**
(21) Anmeldenummer: 16700719.4
(22) Anmeldetag: 14.01.2016
(51) Int. Cl.: B60R 21/06, B60R 5/04, B60R 13/02

(54) **FAHRZEUGKAROSSERIE MIT EINER MONTAGEANORDNUNG ZUM EINHÄNGEN EINER NETZTRENNWAND-STANGE**
VEHICLE BODY WITH A MOUNTING ASSEMBLY FOR A PARTITIONING NET SUPPORT BAR
CARROSSERIE DE VÉHICULE AVEC UN AGENCEMENT DE MONTAGE POUR L'ACCROCHAGE D'UNE BARRE DE SUPPORT D'UNE CLOISON À FILET

(30) Priorität: 17.02.2015 DE 102015202858
(43) Veröffentlichungstag der Anmeldung: 27.12.2017
(73) Patentinhaber: Volkswagen Aktiengesellschaft, 38440 Wolfsburg (DE)
(72) Erfinder: REITMEIER, Christian, 38118 Braunschweig (DE); HABROM, Martin, 38448 Wolfsburg (DE)
(86) Internationale Anmeldenummer: PCT/EP2016/050701
(87) Internationale Veröffentlichungsnummer: WO 2016/131567

(56) Entgegenhaltungen:
- EP-A1- 1 800 967
- DE-A1-102010 017 556
- DE-U1-202005 014 602
- US-A- 5 736 215

## Beschreibung

Die Erfindung betrifft eine Fahrzeugkarosserie mit einer Montageanordnung zum Einhängen einer Netztrennwand-Stange in einer Einhängeöse nach dem Patentanspruch 1.

Die Karosserie- oder Rohbaustruktur eines zweispurigen Kraftfahrzeugs weist in gängiger Praxis einen Dachrahmen auf, der aus Dachrahmen-Längsträgern (d.h. Dachrahmen-Seitenteilen) und aus Dachrahmen-Querträgern aufgebaut ist. An den Dachrahmen-Seitenteilen sind unterschiedliche Anbauteile rohbaufest angebunden, etwa Halterungen für den Kopfairbag oder Einhängebauteile zum Einhängen einer Netztrennwand-Stange.

In einer bekannten Montageanordnung ist an einem karosserieseitigen, das heißt rohbaufest montierten Metall-Trägerteil eine Einhängeöse für die Netztrennwand-Stange ausgebildet. Das rohbaufest montierte Metall-Trägerteil ist ausgehend vom Fahrzeuginnenraum von einem Dachhimmel sichtgeschützt überdeckt und mit einem lichten Abstand vom Dachhimmel beabstandet. Zudem ist eine Netztrennwand-Blende bereitgestellt. Deren Außenumfang ist an einer ersten Anbindungsstelle an einem Öffnungsrandbereich einer dachhimmelseitigen Montageöffnung angebunden. Die Netztrennwand-Blende weist eine Blendenöffnung auf, die im Wesentlichen in Flucht mit der Einhängeöse des karosserieseitigen Trägerteils ausgerichtet ist. Der die Blendenöffnung definierende ringförmige Öffnungsrandbereich der Netztrennwand-Blende ist an einer zweiten Anbindungsstelle am karosserieseitigen Trägerteil angebunden.

In dem obigen Stand der Technik ist die Netztrennwand-Blende sowohl an der ersten Anbindungsstelle am Dachhimmel als auch an der zweiten Anbindungsstelle am karosserieseitigen Trägerteil weitgehend starr angebunden. Zudem kann rein exemplarisch der Dachhimmel zusammen mit der Netztrennwand-Blende zunächst separat vom Fahrzeugrohbau fertiggestellt und erst danach in die Fahrzeugkarosserie (d.h. in den Fahrzeugrohbau) eingebaut werden. Daraus ergibt sich die Problematik, dass aufgrund von größeren Fahrzeugrohbau-Toleranzen die Netztrennwand-Blende mit mechanischen Spannungen beaufschlagt wird, wodurch die Netztrennwand-Blende nicht immer einwandfrei am Dachhimmel angebunden bleibt. So kann - je nach Rohbau-Toleranz - die Netztrennwand-Blende gegebenenfalls vom Öffnungsrandbereich der Montageöffnung des Dachhimmels nach fahrzeuginnen abheben, so dass unter ungünstigen Umständen ein optisch nachteiliger Spalt zwischen dem Dachhimmel und der Netztrennwand-Blende freigelegt werden kann.

Aus der DE 10 2010 017 556 A1 ist ein Verfahren zum Montieren eines Dachhimmelmoduls einer gattungsgemäßen Karosserie eines Kraftfahrzeuges bekannt, bei dem eine Einhängeöse zum Einhängen von Gegenständen an der Karosserie befestigt wird und ein separat davon hergestelltes Dachhimmelmodul an der Einhängeöse befestigt wird.

Aus der EP 1 800 967 A1 ist ein Kraftfahrzeug mit einer Befestigungseinrichtung für ein Trenn- bzw. Rückhalteelement bekannt. Aus der DE 20 2005 014 602 U1 ist eine Fahrzeugtür bekannt. Aus der US 5 736 215 A ist ein Verfahren zur Herstellung eines Profilformteils bekannt.

Die Aufgabe der Erfindung besteht darin, eine Fahrzeugkarosserie mit einer Montageanordnung zum Einhängen einer Netztrennwand-Stange in einer Einhängeöse bereitzustellen, bei der in einfacher Weise eine einwandfreie Anbindung der Netztrennwand-Blende am Dachhimmel ermöglicht ist.

Die Aufgabe ist durch die Merkmale des Patentanspruches 1 gelöst. Bevorzugte Weiterbildungen der Erfindung sind in den abhängigen Ansprüchen offenbart.

Das in der Einhängeöse einzuhängende Bauteil wird in dem vorliegenden Schutzrechtsdokument als Netztrennwand-Stange bezeichnet, da Netze als Material für eine aufrollbare Trennwand zwischen einem Insassenraum und einem Laderaum im Personenkraftwagen-Bereich am weitesten verbreitet sind. Ohne den Bereich der Erfindung oder den Schutzbereich des Schutzrechts zu verlassen, kann anstelle eines Netzes oder zusätzlich zu einem Netz aber auch ein anderes, flächiges, aufrollbares Material als derartiges Trennwandmaterial benutzt werden, zum Beispiel textile Gewebe oder Gewirke, durchsichtige oder teiltransparente oder durchscheinende oder undurchsichtige Kunststofffolien, Jalousien, Stabrollos oder eine Mischung dieser Materialien.

Die Erfindung beruht auf der Problematik, dass im oben angegebenen Stand der Technik die Netztrennwand-Blende sowohl am rohbaufest montierten, mit der Einhängeöse ausgebildeten Trägerteil als auch am Dachhimmel starr angebunden ist. Vor diesem Hintergrund ist gemäß dem kennzeichnenden Teil des Patentanspruches 1 die Netztrennwand-Blende zweiteilig ausgeführt, und zwar mit einem bauteilsteifen Grundkörper aus einem Hartmaterial und mit einem nachgiebigen Ausgleichselement aus einem Weichmaterial. Mit Hilfe des Ausgleichselementes kann ein beim Zusammenbau der Fahrzeugkarosserie mit dem Dachhimmel auftretender toleranzbedingter Versatz zwischen dem karosserieseitigen Trägerteil und der Netztrennwand-Blende ausgeglichen werden.

In einer technischen Umsetzung ist das Ausgleichselement ringförmig gestaltet und bildet unmittelbar den, die Blendenöffnung der Netztrennwand-Blende umziehenden Öffnungsrandbereich. Im Zusammenbauzustand (d.h. der Dachhimmel ist im Fahrzeugrohbau verbaut) kann das ringförmige Ausgleichselement an der zweiten Anbindungsstelle in einer losen Druckanlage mit dem, die Einhängeöse umziehenden Öffnungsrandbereich des karosserieseitigen Trägerteiles sein.

Das Ausgleichselement ist bevorzugt elastisch nachgiebig ausgeführt, und zwar beispielhaft aus einem Schaumgummi-Material. Alternativ dazu kann das Ausgleichselement zum Beispiel aus einer Gummilippe hergestellt sein. Diese kann bevorzugt in einem 2K-Spritzguss an den bauteilsteifen Grundkörper der Netztrennwand-Blende angespritzt sein. Alternativ dazu kann das Ausgleichselement auch wahlweise auf den Blenden-Grundkörper gesteckt oder damit verklipst sein. Auch andere, für Fachexperten geeignete Materialien, wie zum Beispiel Moosgummi, Verbundflockenschaum, PU-Schaum etc., sind denkbar.

Die Netztrennwand-Stange kann endseitig einen ausgeweiteten Stangenkopf aufweisen. Dieser ist in die Einhängeöse des Trägerteils einhängbar. Im eingehängten Zustand hintergreift der ausgeweitete Stangenkopf den Öffnungsrand der Einhängeöse auf der fahrzeugäußeren Seite (das heißt auf der vom Fahrzeuginnenraum abgewandten Seite) und kann bevorzugt unmittelbar auf dem karosserieseitigen Trägerteil aufliegen. In einer bevorzugten Ausführungsvariante der zweiten Anbindungsstelle kann das Blenden-Ausgleichselement unmittelbar mit der, dem Fahrzeuginnenraum zugewandten, fahrzeuginneren Seite des Trägerteils in Druckanlage sein. Die Netztrennwand-Blende wird somit - im Unterschied zum gattungsgemäßen Stand der Technik - nicht von fahrzeuginnen durch die Einhängeöse hindurch bis zur fahrzeugäußeren Seite des Trägerteils ausgeführt.

Erfindungsgemäß ist die Netztrennwand-Blende nicht mehr rohbaufest, das heißt starr am Fahrzeugrohbau (das heißt am karosserieseitigen Trägerteil) montiert, sondern vielmehr - unter Zwischenschaltung des Ausgleichselementes - nachgiebig am karosserieseitigen Einhängeöse-Trägerteil montiert. Das Ausgleichselement wirkt dabei als eine Schwingungsentkopplung, die eine Übertragung betriebsbedingter Vibrationen vom Fahrzeugrohbau auf den Grundkörper der Netztrennwand-Blende verhindert. Im Unterschied zu dieser Schwingungsentkopplung ist die Netztrennwand-Stange im eingehängten Zustand nach wie vor über die Einhängeöse des karosserieseitigen Trägerteils mit dem Fahrzeugrohbau schwingungsgekoppelt. Betriebsbedingte Vibrationen werden somit vom karosserieseitigen Trägerteil auf die Netztrennwand-Stange übertragen. Dies kann bei einem unmittelbaren Kontakt der Netztrennwand-Stange mit dem Grundkörper der Netztrennwand-Blende zu einer nachteiligen Geräuschentwicklung führen. Vor diesem Hintergrund kann erfindungsgemäß die Netztrennwand-Stange im eingehängten Zustand außer Anlage mit dem Grundkörper der Netztrennwand-Blende positioniert sein.

In einer technischen Ausführung kann der Grundkörper der Netztrennwand-Blende einen plattenförmigen Basisabschnitt aufweisen, dessen Außenumfang an der ersten Anbindungsstelle am Öffnungsrandbereich der Dachhimmel-Montageöffnung angebunden ist. Der Basisabschnitt des Blenden-Grundkörpers kann in den hohlzylindrischen oder trichterförmigen Einführabschnitt übergehen. Dieser kann wiederum in der Zusammenbaulage über einen lichten Freiraum von der Netztrennwand-Stange beabstandet sein, um die oben erwähnte Geräuschentwicklung zu vermeiden.

Für einen zusätzlichen Toleranzausgleich kann der Außenumfang der Netztrennwand-Blende an der ersten Anbindungsstelle in einer schwimmenden Lagerung am Öffnungsrandbereich der Dachhimmel-Montageöffnung befestigt sein. Die erste Anbindungsstelle zwischen der Netztrennwand-Blende und dem Dachhimmel kann mittels einer blendenseitigen Rastkontur realisiert sein, die den Öffnungsrandbereich der Dachhimmel-Montageöffnung fahrzeuginnen und fahrzeugaußen umgreift. Für eine einwandfreie Anbindung am Dachhimmel kann der Öffnungsrandbereich der Dachhimmel-Montageöffnung mit einem Verstärkungsrahmen verstärkt sein, der auf der fahrzeugäußeren Seite des Dachhimmels positioniert ist und daran festgeklebt ist. Der Verstärkungsrahmen kann von der fahrzeugäußeren Rastkontur der Netztrennwand-Blende umgriffen sein. Alternativ kann gegebenenfalls im Hinblick auf die oben erwähnte schwimmende Lagerung der Verstärkungsrahmen in einer losen Anlage, das heißt verschiebbar auf dem Dachhimmel aufliegen.

In einer weiteren Ausführungsvariante kann die Netztrennwand-Blende so ausgelegt sein, dass sie gleichzeitig auch in Doppelfunktion eine Leseleuchte mit umrahmt, wodurch im Hinblick auf eine Bauteilreduzierung eine separate Leseleuchte-Blende eingespart werden kann.

Das erfindungsgemäße Ausgleichselement kann bevorzugt so ausgeführt sein, dass es - im Vergleich zu seinem unverformten Fertigungszustand - in der Konstruktionslage bis etwa zur Hälfte komprimiert ist. Das Ausgleichselement muss durch Ausdehnung bzw. weitere Komprimierung den Toleranzbereich zwischen dem Fahrzeugrohbau und dem Dachhimmel ausgleichen können.

Die Verrastung/Verklipsung der Netztrennwand-Blende am Verstärkungsrahmen erfolgt beispielhaft entweder mittels angespritzter oder aufgesteckter Klammern. Für den Fall, dass der Verstärkungsrahmen lose verklipst ist, kann bei der Produktion des Dachhimmels die Netztrennwand-Blende zusammen mit dem Verstärkungsrahmen noch geringfügig verschoben werden, um gegebenenfalls eine auftretende Toleranz, vor allem in der Fahrzeughoch- und - querrichtung, aber auch in Fahrzeuglängsrichtung auszugleichen.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Seitenansicht ein zweispuriges Kraftfahrzeug mit teilweisem Aufriss, der eine Netztrennwand in der Gebrauchslage zeigt;
- Fig. 2: eine Schnittdarstellung entlang der Schnittebene A-A aus der Fig. 1, die eine Montageanordnung gemäß dem Stand der Technik zeigt; und
- Fig. 3: in einer Ansicht entsprechend der Fig. 2 ein Ausführungsbeispiel einer erfindungsgemäßen Montageanordnung.

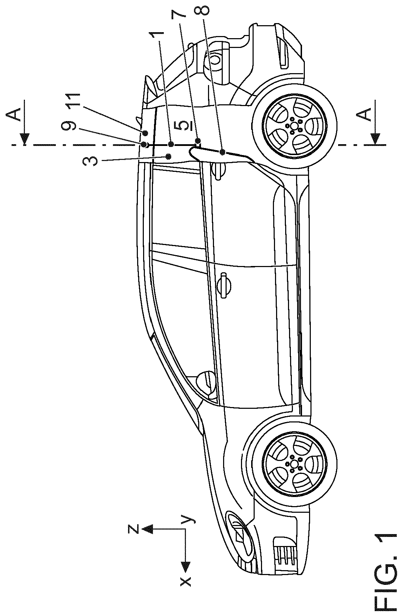

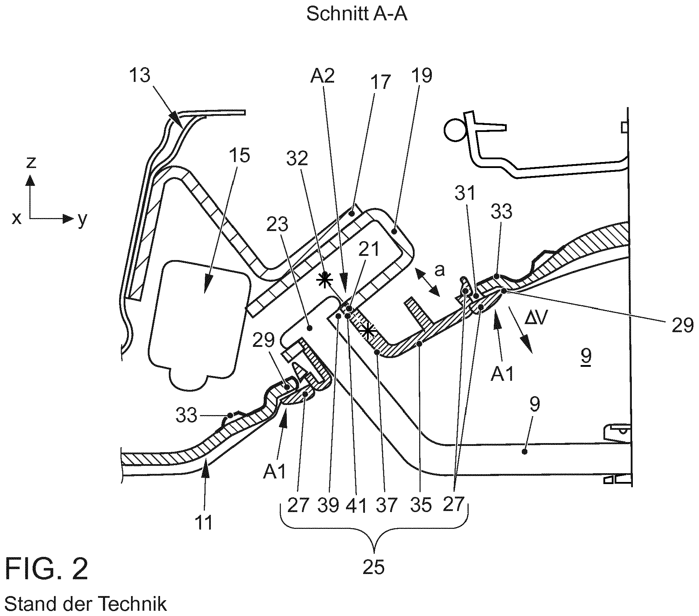

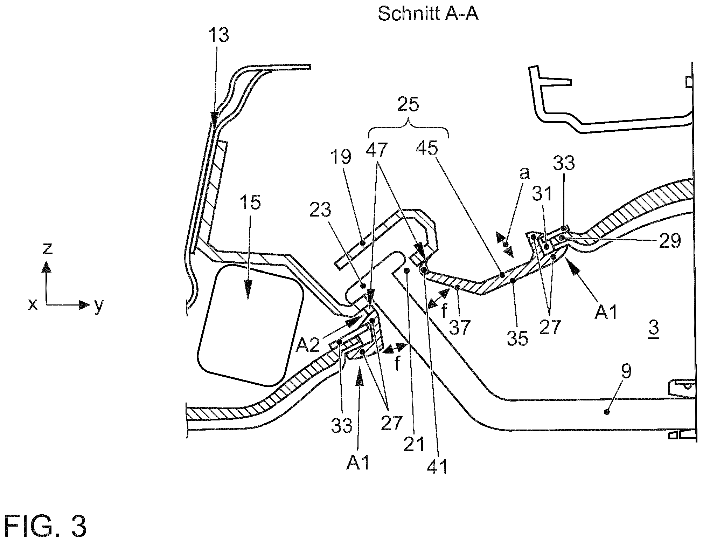

In der Fig. 1 ist ein Fahrzeug in Seitenansicht gezeigt, das heckseitig eine Netztrennwand 1 aufweist, die in der dargestellten Gebrauchslage einen Insassenraum 3 von einem heckseitigen Laderaum 5 trennt. Die Netztrennwand 1 weist in der Fig. 1 eine Aufwickelkassette 7 auf, die rückseitig an einer Rückenlehne 8 einer Rücksitzbank des Fahrzeugs positioniert ist. In der Fig. 1 ist die Netztrennwand 1 entgegen einer Federkraft aus der Aufwickelkassette 7 herausgezogen und mit ihrer Netztrennwand-Stange 9 in am Dachhimmel 11 angeordnete Einhängeöffnungen eingehängt, die mit Bezug auf eine Fahrzeugmittellängsachse beidseitig spiegelbildlich am Dachhimmel 11 angeordnet sind und von denen eine Einhängegeometrie nachfolgend anhand der Fig. 2 und 3 beschrieben ist.

Zunächst wird zum einfacheren Verständnis der Erfindung die in der Fig. 2 gezeigte Einhängegeometrie nach dem Stand der Technik erläutert. So weist gemäß der Fig. 2 die Fahrzeugkarosserie einen Dachrahmen-Längsträger bzw. ein Dachrahmen-Seitenteil 13 auf, das Bestandteil eines Dachrahmens ist. An der Fahrzeuginnenseite des Dachrahmen-Seitenteils 13 sind nicht dargestellte Halterungen für einen Kopfairbag 15 sowie eine Halterung für die Einhängegeometrie der Netztrennwand-Stange 9 rohbaufest montiert. Diese weist gemäß der Fig. 2 einen fahrzeuginnen am Dachrahmen-Seitenteil 13 verschweißten Metall-Halter 17 auf. Am Metall-Halter 17 ist ein im Profil U-förmiges Trägerteil 19 montiert, das an seinem fahrzeuginneren U-Schenkel eine Einhängeöse 21 aufweist, in der ein ausgeweiteter Stangenkopf 23 der Netztrennwand-Stange 9 eingehängt ist.

Die Einhängegeometrie ist von einem Dachhimmel 11 sichtgeschützt überdeckt sowie mit einem lichten Abstand a vom Dachhimmel 11 beabstandet. Die in der Fig. 2 gezeigte Montageanordnung weist zudem eine Netztrennwand-Blende 25 auf, an deren Außenumfang eine nur angedeutete Rastkontur 27 ausgebildet ist. Die Rastkontur 27 umgreift ein einer ersten Anbindungsstelle A1 einen Öffnungsrandbereich 29 einer Montageöffnung 31 des Dachhimmels 11. Zur Verstärkung des Öffnungsrandbereiches 29 der dachhimmelseitigen Montageöffnung 31 ist diese rückseitig mit einem daran verklebten Verstärkungsrahmen 33 versehen.

Die in der Fig. 2 gezeigte Netztrennwand-Blende 25 ist aus einem starren Hartmaterial aus Kunststoff gefertigt. Die Netztrennwand-Blende 25 weist einen, dem Fahrzeuginnenraum zugewandten flächigen Basisabschnitt 35 auf, der innen in einen hohlzylindrischen Einführabschnitt 37 übergeht. Der hohlzylindrische Einführabschnitt 37 begrenzt eine Blendenöffnung 39, dessen Öffnungsrandbereich 41 durch die Einhängeöse 21 des Metall-Trägerteils 19 hindurchgeführt ist, und zwar unter Bildung einer zweiten Anbindungsstelle A2. In der zweiten Anbindungsstelle A2 ist der Öffnungsrandbereich 41 der Netztrennwand-Blende 25 in angedeuteter Schraubverbindung 32 mit dem Einhängeöse-Trägerteil 19.

In der Fig. 2 ist die Netztrennwand-Blende 25 sowohl an der ersten Anbindungsstelle A1 starr am Dachhimmel 11 angebunden als auch an der zweiten Anbindungsstelle A2 starr am rohbaufesten Einhängeöse-Trägerteil 19 angebunden. Je nach Fahrzeugrohbau-Toleranz kann im ungünstigen Einbaufall die Netztrennwand-Blende 25 nicht einwandfrei am Dachhimmel 11 angebunden sein. Beispielhaft kann die Netztrennwand-Blende 25 um einen angedeuteten toleranzbedingten Versatz Δv vom Öffnungsrandbereich 29 der dachhimmelseitigen Montageöffnung 31 abgehoben sein. In diesem Fall würde zwischen der Netztrennwand-Blende 25 und dem Öffnungsrandbereich 29 der dachhimmelseitigen Montageöffnung 31 ein optisch nachteiliger Spalt freigelegt sein.

Im Unterschied zur Fig. 2 ist in der Fig. 3 die erfindungsgemäße Netztrennwand-Blende 25 insgesamt zweiteilig ausgeführt, und zwar mit einem bauteilsteifen Grundkörper 45 aus einem Kunststoff-Hartmaterial und einem elastisch nachgiebigen Ausgleichselement 47 aus einem Kunststoff-Weichmaterial. Mit Hilfe des Ausgleichselementes 47 sind gegebenenfalls auftretende Montagetoleranzen zwischen dem Fahrzeugrohbau und der im Dachhimmel 11 montierten Netztrennwand-Blende 25 ausgleichbar. So ist in der Fig. 2 das Ausgleichselement 47 ringförmig ausgeführt und bildet unmittelbar den, die Blendenöffnung 39 begrenzenden Öffnungsrandbereich 41. Im Unterschied zur Fig. 2 ist der Öffnungsrandbereich 41 der Netztrennwand-Blende 25 nicht durch die Einhängeöse 21 hindurch nach fahrzeugaußen geführt und dort verschraubt. Vielmehr ist das ringförmige Ausgleichselement 47 der Netztrennwand-Blende 25 in loser Druckanlage mit einem, die Einhängeöse 21 des karosserieseitigen Trägerteils 19 umziehenden Öffnungsrandbereich. Zudem ist im Hinblick auf eine Bauteilreduzierung in der Fig. 3 auf eine separate Ausbildung des Metall-Halters 17 und des Trägerteils 19 verzichtet. Anstelle dessen ist in der Montageanordnung gemäß Fig. 3 das Einhängeöse-Trägerteil 19 unmittelbar am Dachrahmen-Seitenteil 13 angebunden.

Wie oben erwähnt, ist die erfindungsgemäße Netztrennwand-Blende 25 zweiteilig mit dem Grundkörper 45 und dem Ausgleichselement 47 ausgeführt. Der trichterförmige Einführabschnitt 37 sowie der Basisabschnitt 35 mit der äußeren Rastkontur 27 sind dabei Bestandteil des starren Grundkörpers 45. Das Ausgleichselement 47 kann beispielhaft durch einen Schaumgummi (in der Fig. 3 links von der Netztrennwand-Stange 9 gezeigt) oder alternativ durch eine im 2K-Spritzguss am Grundkörper 45 angespritzte Gummilippe (in der Fig. 3 rechts von der Netztrennwand-Stange 9 dargestellt) ausgeführt sein.

In der Fig. 3 umgreift die Rastkontur 27 der Netztrennwand-Blende 25 den Öffnungsrandbereich 29 der dachhimmelseitigen Montageöffnung 31, und zwar unter Zwischenlage des Verstärkungsrahmens 33. Dieser kann rückseitig am Dachhimmel 11 festgeklebt sein oder alternativ dazu in loser Auflage am Dachhimmel 11 angeordnet sein. Auf diese Weise ergibt sich an der ersten Anbindungsstelle A1 eine schwimmende Lagerung der Netztrennwand-Blende 25, wodurch gegebenenfalls ein weiterer Toleranzausgleich durchführbar ist.

Wie aus der Fig. 3 hervorgeht, ist die Netztrennwand-Blende 25 nicht mehr rohbaufest montiert, das heißt starr am Fahrzeugrohbau (das heißt am karosserieseitigen Trägerteil 19) montiert, sondern vielmehr - unter Zwischenschaltung des Ausgleichselementes 47 - nachgiebig am karosserieseitigen Einhängeöse-Trägerteil 19 in Druckanlage. Das Ausgleichselement 47 wirkt dabei als eine Schwingungsentkopplung, die eine Übertragung betriebsbedingter Vibrationen vom Fahrzeugrohbau auf den Grundkörper 45 der Netztrennwand-Blende 25 verhindert.

Im Unterschied zu dieser Schwingungsentkopplung ist die Netztrennwand-Stange 9 im eingehängten Zustand nach wie vor über die Einhängeöse 21 des karosserieseitigen Trägerteils 19 mit dem Fahrzeugrohbau schwingungsgekoppelt. Betriebsbedingte Vibrationen können somit vom karosserieseitigen Trägerteil 19 auf die Netztrennwand-Stange 9 übertragen werden. Dies würde bei einem unmittelbaren Kontakt zwischen der Netztrennwand-Stange 9 und dem Grundkörper 45 der Netztrennwand-Blende 25 zu einer nachteiligen Geräuschentwicklung führen. Um eine solche Geräuschentwicklung zu vermeiden, ist in der Fig. 3 die Netztrennwand-Stange 9 im eingehängten Zustand außer Anlage mit dem Grundkörper 45 der Netztrennwand-Blende 25 positioniert.

Dabei ist insbesondere der trichterförmige Einführabschnitt 37 über einen lichten Freiraum f von der Netztrennwand-Stange 9 beabstandet, um die oben erwähnte Geräuschentwicklung zu vermeiden.

## Patentansprüche

1. Fahrzeugkarosserie mit einer Montageanordnung zum Einhängen einer Netztrennwand-Stange (9), wobei die Montageanordnung eine Einhängeöse (21) aufweist, die an einem karosserieseitigen Trägerteil (19) ausgebildet ist, das ausgehend vom Fahrzeuginnenraum (3, 5) von einem Dachhimmel (11) sichtgeschützt überdeckt ist sowie mit einem lichten Abstand (a) vom Dachhimmel (11) beabstandet ist, und wobei die Montageanordnung eine Netztrennwand-Blende (25) aufweist, deren Außenumfang an einer ersten Anbindungsstelle (A1) an einem Öffnungsrandbereich (29) einer dachhimmelseitigen Montageöffnung (31) angebunden ist, welche Netztrennwand-Blende (25) eine Blendenöffnung (39) aufweist, die im Wesentlichen in Flucht mit der Einhängeöse (21) des Trägerteils (19) ausgerichtet ist und deren ringförmiger Öffnungsrandbereich (41) an einer zweiten Anbindungsstelle (A2) am Trägerteil (19) angebunden ist, **dadurch gekennzeichnet, dass** die Netztrennwand-Blende (25) zweiteilig mit einem bauteilsteifen Grundkörper (45) aus einem Hartmaterial und mit einem nachgiebigen Ausgleichselement (47) aus einem Weichmaterial ausgebildet ist, mit dem ein beim Zusammenbau der Fahrzeugkarosserie auftretender toleranzbedingter Versatz (Δv) zwischen dem karosserieseitigen Trägerteil (19) und der Netztrennwand-Blende (25) ausgleichbar ist.

2. Fahrzeugkarosserie nach Anspruch 1, **dadurch gekennzeichnet, dass** das Ausgleichselement (47) ringförmig ist, und dass das Ausgleichselement (47) unmittelbar den, die Blendenöffnung (39) umziehenden Öffnungsrandbereich (41) der Blende (25) bildet.

3. Fahrzeugkarosserie nach Anspruch 2, **dadurch gekennzeichnet, dass** das ringförmige Ausgleichselement (47) an der zweiten Anbindungsstelle (A2) in Druckanlage mit einem, die Einhängeöse (21) des karosserieseitigen Trägerteils (19) umziehenden Öffnungsrandbereich ist.

4. Fahrzeugkarosserie nach Anspruch 1, **dadurch gekennzeichnet, dass** das Ausgleichselement (47) aus einem Schaumgummi oder aus einer Gummilippe hergestellt ist, die im 2K-Spritzguß an den bauteilsteifen Grundkörper (45) der Netztrennwand-Blende (25) angespritzt ist.

5. Kombination einer Fahrzeugkarosserie mit einer Montageanordnung nach Anspruch 1 und einer Netztrennwand-Stange (9), **dadurch gekennzeichnet, dass** die Netztrennwand-Stange (9) endseitig einen ausgeweiteten Stangenkopf (23) aufweist, der in die Einhängeöse (21) des Trägerteils (19) einhängbar ist, und dass der Stangenkopf (23) im eingehängten Zustand den Öffnungsrand der Einhängeöse (21) fahrzeugaußen hintergreift und mit dem karosserieseitigen Trägerteil (19) in unmittelbarer Anlage ist.

6. Fahrzeugkarosserie nach Anspruch 2, **dadurch gekennzeichnet, dass** das Ausgleichselement (47) an der zweiten Anbindungsstelle (A2) mit der fahrzeuginneren Seite des Trägerteils (19) in Druckanlage ist, und dass im eingehängten Zustand der Grundkörper (45) der Netztrennwand-Blende (25) außer Anlage mit der Netztrennwand-Stange (9) ist.

7. Fahrzeugkarosserie nach Anspruch 1, **dadurch gekennzeichnet, dass** der Grundkörper (45) der Netztrennwand-Blende (25) einen plattenförmigen Basisabschnitt (35) aufweist, dessen Außenumfang an der ersten Anbindungsstelle (A1) am Öffnungsrandbereich (29) der Montageöffnung (31) des Dachhimmels (11) angebunden ist, und dass der Basisabschnitt (35) in den hohlzylindrischen oder trichterförmigen Einführabschnitt (37) übergeht.

8. Fahrzeugkarosserie nach Anspruch 7, **dadurch gekennzeichnet, dass** der trichterförmige oder hohlzylindrische Einführabschnitt (37) des Grundkörpers (45) der Netztrennwand-Blende (25) über einen lichten Freiraum (f) von der Netztrennwand-Stange (9) beabstandet ist.

9. Fahrzeugkarosserie nach Anspruch 1, **dadurch gekennzeichnet, dass** für einen weiteren Toleranzausgleich der Außenumfang der Netztrennwand-Blende (25) an der ersten Anbindungsstelle (A1) in schwimmender Lagerung am Öffnungsrandbereich (29) der Montageöffnung (31) des Dachhimmels (11) befestigt ist.

10. Fahrzeugkarosserie nach Anspruch 1, **dadurch gekennzeichnet, dass** zur Realisierung der ersten Anbindungsstelle (A1) der Außenumfang der Netztrennwand-Blende (25) mit einer Rastkontur (27) ausgebildet ist, die den Öffnungsrandbereich (29) der Montageöffnung (31) des Dachhimmels (11) fahrzeuginnen und fahrzeugaußen umgreift.

11. Fahrzeugkarosserie nach Anspruch 10, **dadurch gekennzeichnet, dass** zur Verstärkung des Öffnungsrandbereichs (29) der Montageöffnung (31) des Dachhimmels (11) an dessen fahrzeugäußerer Seite ein Verstärkungsrahmen (33) positioniert ist, der von der fahrzeugäußeren Rastkontur (27) der Netztrennwand-Blende (25) umgriffen ist.

12. Fahrzeugkarosserie nach Anspruch 11, **dadurch gekennzeichnet, dass** zur Realisierung der schwimmenden Lagerung der Netztrennwand-Blende (25) an der ersten Anbindungsstelle (A1) der Verstärkungsrahmen (33) in loser Anlage mit dem Dachhimmel (11) ist.

## Claims

1. Vehicle body with a mounting arrangement for suspending a partitioning net rod (9), wherein the mounting arrangement has a suspending eyelet (21) which is formed on a body-side carrier part (19) which is covered in a manner protected from view from the vehicle interior (3, 5) by a roof lining (11) and is spaced apart from the roof lining (11) with a clear distance (a), and wherein the mounting arrangement has a partitioning net screen (25), the outer circumference of which is connected at a first connecting point (A1) to an opening edge region (29) of a roof-lining-side mounting opening (31), which partitioning net screen (25) has a screen opening (39) which is oriented substantially in alignment with the suspending eyelet (21) of the carrier part (19) and the annular opening edge region (41) of which is connected at a second connecting point (A2) to the carrier part (19), **characterized in that** the partitioning net screen (25) is formed in two parts with a component-rigid main body (45) composed of a hard material and with a flexible compensating element (47) composed of a soft material, with which a tolerance-induced offset (Δv) occurring between the body-side carrier part (19) and the partitioning net screen (25) during the assembly of the vehicle body can be compensated for.

2. Vehicle body according to Claim 1, **characterized in that** the compensating element (47) is annular, and **in that** the compensating element (47) directly forms the opening edge region (41) of the screen (25), which opening edge region surrounds the screen opening (39).

3. Vehicle body according to Claim 2, **characterized in that** the annular compensating element (47) is in pressure contact at the second connecting point (A2) with an opening edge region surrounding the suspending eyelet (21) of the body-side carrier part (19) .

4. Vehicle body according to Claim 1, **characterized in that** the compensating element (47) is produced from foam rubber or from a rubber lip which is injection moulded by two-component injection moulding onto the component-rigid main body (45) of the partitioning net screen (25).

5. Combination of a vehicle body with a mounting arrangement according to Claim 1 and a partitioning net rod (9), **characterized in that** the partitioning net rod (9) has, on the end side, an expanded rod head (23) which can be suspended in the suspending eyelet (21) of the carrier part (19), and **in that**, in the suspended state, the rod head (23) engages behind the opening edge of the suspending eyelet (21) on the outside of the vehicle and is directly in contact with the body-side carrier part (19).

6. Vehicle body according to Claim 2, **characterized in that** the compensating element (47) is in pressure contact at the second connecting point (A2) with the vehicle-interior side of the carrier part (19), and **in that**, in the suspended state, the main body (45) of the partitioning net screen (25) is not in contact with the partitioning net rod (9).

7. Vehicle body according to Claim 1, **characterized in that** the main body (45) of the partitioning net screen (25) has a plate-like base portion (35), the outer circumference of which is connected at the first connecting point (A1) to the opening edge region (29) of the mounting opening (31) of the roof lining (11), and **in that** the base portion (35) merges into the hollow-cylindrical or funnel-shaped introducing portion (37).

8. Vehicle body according to Claim 7, **characterized in that** the funnel-shaped or hollow-cylindrical introducing portion (37) of the main body (45) of the partitioning net screen (25) is spaced apart from the partitioning net rod (9) via a clear clearance (f) .

9. Vehicle body according to Claim 1, **characterized in that**, for further tolerance compensation, the outer circumference of the partitioning net screen (25) is fastened at the first connecting point (A1) in a floating mounting to the opening edge region (29) of the mounting opening (31) of the roof lining (11) .

10. Vehicle body according to Claim 1, **characterized in that**, in order to realize the first connecting point (A1), the outer circumference of the partitioning net screen (25) is formed with a latching contour (27) which engages around the opening edge region (29) of the mounting opening (31) of the roof lining (11) on the inside and outside of the vehicle.

11. Vehicle body according to Claim 10, **characterized in that**, in order to reinforce the opening edge region (29) of the mounting opening (31) of the roof lining (11) on the vehicle-outer side thereof, a reinforcing frame (33) is put into position and is engaged around by the vehicle-outer latching contour (27) of the partitioning net screen (25).

12. Vehicle body according to Claim 11, **characterized in that**, in order to realize the floating mounting of the partitioning net screen (25) at the first connecting point (A1), the reinforcing frame (33) is in loose contact with the roof lining (11).

## Revendications

1. Carrosserie de véhicule présentant un ensemble de montage permettant de suspendre une barre de support (9) d'une séparation en filet, l'ensemble de montage présentant un oeillet de suspension (21) formé sur une pièce de support (19) située sur la carrosserie et recouverte et protégée des regards depuis l'habitacle (3, 5) du véhicule par un ciel de toit (11) tout en étant maintenue à petite distance (a) du ciel de toit (11), l'ensemble de montage présentant une cloison (25) de la séparation en filet dont la périphérie extérieure est liée en un premier emplacement de liaison (A1) à une bordure (29) d'une ouverture de montage (31) située du côté du ciel de toit, cette cloison (25) de la séparation en filet présentant une ouverture de cloison (39) essentiellement alignée sur l'oeillet de suspension (21) de la pièce de support (19), la bordure annulaire (41) de l'ouverture étant reliée à la pièce de support (19) en un deuxième emplacement de liaison (A2), **caractérisée en ce que** la cloison (25) de la séparation en filet est réalisée en deux parties, avec un corps de base (45) rigide en matériau dur et un élément de compensation (47) déformable en matériau déformable qui permet la compensation d'un décalage (Δv) entre la pièce de support (19) côté carrosserie et la cloison (25) de la séparation en filet provoqué par les tolérances survenant lors du montage de la carrosserie du véhicule.

2. Carrosserie de véhicule selon la revendication 1, **caractérisée en ce que** l'élément de compensation (47) est de forme annulaire et **en ce que** l'élément de compensation (47) forme directement la bordure annulaire (41) entourant l'ouverture (39) de la cloison (25) .

3. Carrosserie de véhicule selon la revendication 2, **caractérisée en ce que** sur le deuxième emplacement de liaison (A2), l'élément de compensation (47) est placé sous compression avec une bordure d'ouverture qui entoure l'oeillet de suspension (21) de la pièce de support (19) côté carrosserie.

4. Carrosserie de véhicule selon la revendication 1, **caractérisée en ce que** l'élément de compensation (47) est réalisé à partir d'un caoutchouc mousseux ou d'une lèvre en caoutchouc injecté par moulage par injection de 2 composants sur le corps de base (45) rigide de la cloison (25) de la séparation en filet.

5. Combinaison d'une carrosserie de véhicule présentant un ensemble de montage selon la revendication 1 et d'une barre de support (9) d'une séparation en filet, **caractérisée en ce que** la barre de support (9) de la séparation en filet présente à son extrémité une tête évasée (23) de barre qui peut être suspendue dans l'oeillet de suspension (21) de la pièce de support (19) et **en ce qu'**en position suspendue, la tête (23) de la barre chevauche par l'arrière le bord de l'ouverture de l'oeillet de suspension (21) à l'extérieur du véhicule et vient se placer directement contre la pièce de support (19) côté carrosserie.

6. Carrosserie de véhicule selon la revendication 2, **caractérisée en ce que** sur le deuxième emplacement de liaison (A2), l'élément de compensation (47) vient se placer de manière comprimée sur le côté de la partie de support (19) situé à l'intérieur du véhicule et **en ce qu'**en position suspendue, le corps de base (45) de la cloison (25) de la séparation en filet n'est pas en contact avec la barre de support (9) de la séparation en filet.

7. Carrosserie de véhicule selon la revendication 1, **caractérisée en ce que** le corps de base (45) de la cloison (25) de la séparation en filet présente une section de base (35) en forme de plaque dont la périphérie extérieure est reliée au premier emplacement de liaison (A1) sur la bordure (29) de l'ouverture de montage (31) du ciel de toit (11) et **en ce que** la section de base (35) se prolonge en la section d'insertion (37) en forme de cylindre creux ou d'entonnoir.

8. Carrosserie de véhicule selon la revendication 7, **caractérisée en ce que** la section d'insertion (37) du corps de base (45) de la cloison (25) de la séparation en filet est maintenue à distance de la barre de support (9) de la séparation en filet sur un petit espace libre (f).

9. Carrosserie de véhicule selon la revendication 1, **caractérisée en ce que** pour encore compenser les tolérances, la périphérie extérieure de la cloison (25) de la séparation en filet est fixée au premier emplacement de liaison (A1) de manière flottante sur la bordure (29) de l'ouverture de montage (31) du ciel de toit (11).

10. Carrosserie de véhicule selon la revendication 1, **caractérisée en ce que** pour réaliser le premier emplacement de liaison (A1), la périphérie extérieure de la cloison (25) de la séparation en filet est configurée avec un contour d'encliquetage (27) qui chevauche la bordure (29) de l'ouverture de montage (31) du ciel de toit (11) du côté intérieur et du côté extérieur du véhicule.

11. Carrosserie de véhicule selon la revendication 10, **caractérisée en ce que** pour renforcer la bordure (29) de l'ouverture de montage (31) du ciel de toit (11) sur son côté situé à l'extérieur du véhicule, un cadre de renfort (33) est positionné et est chevauché par le contour d'encliquetage (27) extérieur au véhicule de la cloison (25) de la séparation en filet.

12. Carrosserie de véhicule selon la revendication 11, **caractérisée en ce que** pour réaliser le montage flottant de la cloison (25) de la séparation en filet en le premier emplacement de liaison (A1), le cadre de renfort (33) est placé de manière lâche sur le ciel de toit (11).
